# EUROPEAN PATENT APPLICATION

(11) **EP 2 146 467 A1**
(43) Date of publication of application: **20.01.2010**
(21) Application number: 08757585.8
(22) Date of filing: 03.06.2008
(51) Int. Cl.: H04L 12/66

(54) **RESOURCE MANAGEMENT METHOD, BEARING DEVICE AND BEARING CONTROL DEVICE**

(30) Priority: 04.06.2007 CN 200710112305
(71) Applicant: Huawei Technologies Co., Ltd., Longgang District, Shenzhen Guangdong 518129 (CN)
(72) Inventor: LIN, Yangbo, Longgang District 518129 Shenzhen (CN)
(74) Representative: Kreuz, Georg Maria
(86) International application number: PCT/CN2008/071174
(87) International publication number: WO 2008/148347

(57) **Abstract**

The present invention relates to the communication field and discloses a resource management method, a bearer device, and a bearer control device. The bearer control device can instruct the bearer device to reserve and/or allocate resources more simply and efficiently. A mapping relation between an abstract resource and specific resources is stored in the bearer device beforehand; each abstract resource may correspond to one or more specific resources; when the bearer control device needs to instruct the bearer device to reserve and/or allocate resources, the bearer control device sends a message indicative of reserving and/or allocating an abstract resource to the bearer device, and the abstract resource indicated in the message corresponds to the specific resources that actually need to be reserved and/or allocated by the bearer device; and the bearer device may reserve and/or allocate the corresponding specific resources according to the message.

## Description

### Field of the Invention

The present invention relates to the communication field, and in particular, to a resource management method, a bearer device, and a bearer control device in an architecture where services are separated from bearers.

### Background of the Invention

A Media Gateway Controller (MGC) and a Media Gateway (MG) are two key components in a packet-switched network where services are separated from bearers. The MGC is responsible for service control, and the MG is responsible for media bearing. Thus, the service control plane is separated from the media bearer plane.

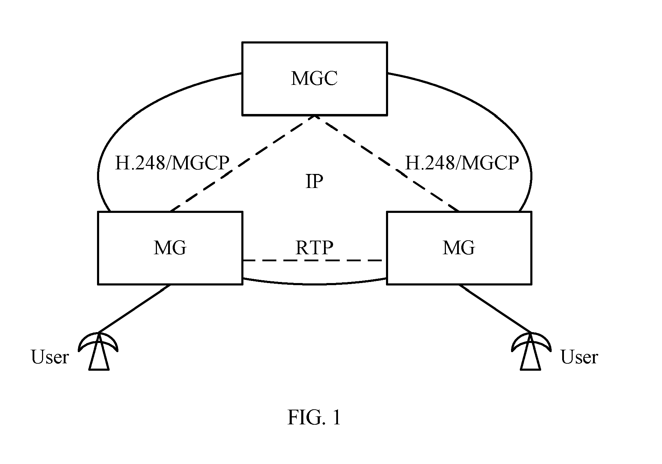

The media gateway control protocol is a primary protocol for communications between the MGC and the MG. Currently, the Gateway Control Protocol (H.248/MeGaCo) and the Media Gateway Control Protocol (MGCP) are widely used, as shown in FIG. 1.

The H.248/MeGaCo protocol derives from the MGCP. Taking the H.248 protocol as an example, the MG carries a service through the resources on the MG. Such resources are abstractly expressed as terminations. The associations between terminations are abstractly expressed as contexts.

Based on the above abstract connection model, interactions between the services and the bearers are actually operations on the terminations and the contexts. Such operations are performed through command requests and replies between the MGC and the MG. Command types include: Add, Modify, Subtract, Move, AuditValue, AuditCapabilities, Notify, and ServiceChange. Command parameters, also known as descriptors, are categorized into property, signal, event, and statistic. For better description, parameters with service relevancy are aggregated into a package logically.

As defined in H.248, when a Media Gateway Controller (MGC) needs to instruct an Media Gateway (MG) to reserve and/or allocate a resource for a service, the MGC needs to select a resource for each feature of the service and set parameters of the resource, and instruct the MG to reserve and/or allocate the selected resource and set the resource. As a result, a series of resources are reserved and/or allocated on the MG, and such resources are set, and such resources and settings are combined together to implement the service.

In a typical scenario, termination resources need to be reserved and/or allocated for an audience user of a conference. The operations include: setting the streaming mode on the termination to "receive only", setting the media type to "audio", and using a specific audio codec algorithm and packet time, and so on. The MGC needs to send an instruction for reserving and/or allocating and setting each specific resource to the MG one by one.

However, it has become apparent that: For a specified service, the parameters to be set and the values of the parameters are generally stable; at every time of using the service, the MGC still needs to instruct the MG to allocate and set the parameters one by one, thus generating unnecessary communication and performance overheads.

### Summary of the Invention

The present invention provides a resource management method, a bearer device, and a bearer control device. The bearer control device can instruct more simply and efficiently the bearer device to reserve and/or allocate resources, thus reducing communication and performance overheads.

As a first aspect the resource management method of the present invention includes:
by a bearer device, receiving a message indicative of reserving and/or allocating an abstract resource from a bearer control device;
searching for specific resources corresponding to the abstract resource to be reserved and/or allocated according to a mapping relation between the abstract resource and the specific resources in the bearer device; and
reserving and/or allocating the specific resources, where each abstract resource corresponds to at least one specific resource.

As a second aspect the bearer device of the present invention includes:
a storing unit, adapted to: store a mapping relation between an abstract resource and specific resources, where each abstract resource corresponds to at least one specific resource;
a receiving unit, adapted to receive a message indicative of reserving and/or allocating the abstract resource from a bearer control device;
a searching unit, adapted to search for the specific resources corresponding to the abstract resource to be reserved and/or allocated according to the mapping relation stored in the storing unit; and
an operating unit, adapted to perform operations of reserving and/or allocating the specific resources found by the searching unit.

As a third aspect the bearer control device of the present invention includes:
a generating unit, adapted to generate a message indicative of reserving and/or allocating an abstract resource according to the abstract resource that needs to be reserved and/or allocated by a bearer device; and
a sending unit, adapted to send the message indicative of reserving and/or allocating the abstract resource to the bearer device.

Compared with the prior art, the present invention has the following benefits:
A mapping relation between an abstract resource and specific resources is stored in the bearer device beforehand; each abstract resource may correspond to one or more specific resources; when the bearer control device needs to instruct the bearer device to reserve and/or allocate resources, the bearer control device sends a message indicative of reserving and/or allocating an abstract resource to the bearer device, and the abstract resource indicated in the message corresponds to the specific resources that actually need to be reserved and/or allocated by the bearer device; and the bearer device may reserve and/or allocate the corresponding specific resources according to the message. Therefore, when more than one specific resource needs to be reserved and/or allocated by the bearer device, the bearer control device may send a message indicative of reserving and/or allocating an abstract resource rather than send multiple messages indicative of reserving and/or allocating specific resources, and the bearer control device can instruct more simply and efficiently the bearer device to reserve and/or allocate resources.

### Brief Description of the Drawings

FIG. 1 shows a networking diagram of an MGC and two MGs in the prior art;
FIG. 2 is a flowchart of a resource management method according to a first embodiment of the present invention;
FIG. 3 shows a structure of a bearer device and a bearer control device according to third and fourth embodiments of the present invention; and
FIG. 4 shows a structure of a searching unit illustrated in FIG. 3 according to an embodiment of the present invention.

### Detailed Description of the Embodiments

To make the technical solution, objectives and merits of the present invention clearer, the following describes the embodiments of the present invention in detail with reference to accompanying drawings.

First, an expression used herein is described below. "A and/or B" herein refers to A, or B, or both A and B, where A and B represent things or actions. For example, "reserving and/or allocating" refers to: reserving, or allocating, or both reserving and allocating. "A and/or B" is a common expression in the art and is used herein for those skilled in the art to better understand the technical solution under the present invention.

A resource management method is provided in the first embodiment of the present invention. In this embodiment, the bearer device stores the mapping relation between the abstract resource and the specific resources. Each abstract resource corresponds to at least one specific resource. The bearer device receives the message indicative of reserving and/or allocating the abstract resource from the bearer control device, searches for the specific resources corresponding to the abstract resource to be reserved and/or allocated in the stored mapping relation, and performs operations of reserving and/or allocating the specific resources. Therefore, when more than one specific resource needs to be reserved and/or allocated by the bearer device, the bearer control device may send one message indicative of reserving and/or allocating an abstract resource rather than send multiple messages indicative of reserving and/or allocating specific resources, and the bearer control device can instruct the bearer device to reserve and/or allocate resources more simply and efficiently.

In this embodiment, the predefined mapping relation is stored in the MG. The mapping relation may include the information such as the name of the abstract resource, and resource mapping description and procedure. The "resource mapping description" describes the specific resources to which the abstract resource is mapped, and describes the management actions for the specific resources; and the "procedure" describes the rules and procedures that need to be followed in using the abstract resource, specific resources and management actions, for example, order of reserving the specific resources.

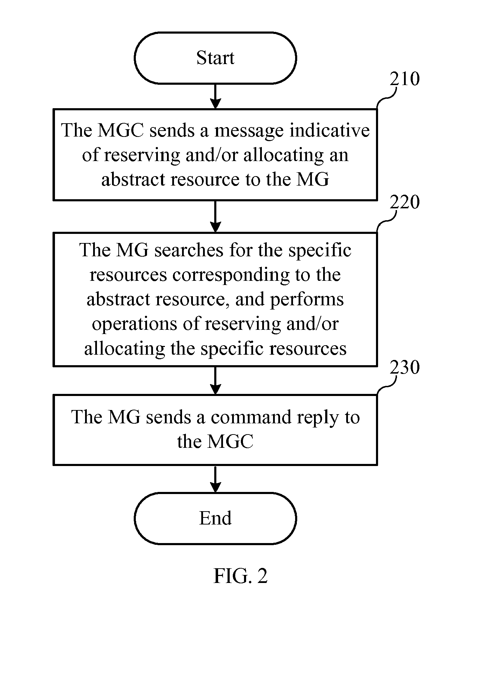

Supposing that the bearer control device is an MGC and that the bearer device is an MG, the process is detailed below, as shown in FIG. 2.

In step 210, when the MGC needs to instruct the MG to reserve and/or allocate resources to a termination or stream, the MGC may determine the corresponding abstract resource as required, and send a message indicative of reserving and/or allocating the determined abstract resource to the MG.

This message may be a command request that carries abstract resource information. Specifically, in this embodiment, a property parameter needs to be defined for describing the abstract resource that needs to be reserved and/or allocated by the MG. The property parameter may be defined in the existing package or a new package. For ease of description in this embodiment, this property is named "Resource Description (RD)", and is defined in a new package named "Abstract Resource Management (ARM) Package". This property parameter is applied to the termination, or the streams on the termination.

The RD property parameter includes the name of the abstract resource that needs to be reserved and/or allocated, and this name uniquely identifies a defined abstract resource. The type of the property parameter may be a string list. Each string instance or element in the list includes the name of an abstract resource.

In this step, by setting an RD property parameter, the MGC may instruct the MG to reserve and/or allocate the specific resources. More specifically, the MGC may add the RD property parameter to a command request sent to the MG, and set the name of the determined abstract resource into the RD property parameter.

In step 220, after receiving a command request from the MGC, the MG obtains the name of the abstract resource from the RD property parameter in the message, and searches for various specific resources corresponding to the abstract resource in the stored mapping relation according to the name of the abstract resource, namely, searches for the "resource mapping description" and "procedure" corresponding to the abstract resource, performs operations of reserving and/or allocating the specific resources indicated by the "resource mapping description", and manages the specific resources according to the management action description. The operations of reservation and/or allocation need to comply with the rules and/or procedures specified in the "procedure".

In step 230, the MG sends a command reply to the MGC. If the resource is reserved and/or allocated successfully, the MG returns a normal reply to the MGC; if the resource is reserved and/or allocated unsuccessfully, the MG returns an error reply to the MGC. The error reply includes an error code and/or an error description text such as "510 Insufficient Resource", which indicates resource insufficiency.

Besides, in this embodiment, the MGC may cancel a reserved and/or allocated resource through an RD property parameter subsequently delivered to the MG. For example, if the value of a subsequently delivered RD property parameter does not include the name of an abstract resource, the reservation and/or allocation of this abstract resource is cancelled; if the value of a subsequently delivered RD property parameter is empty, the reservation and/or allocation of all abstract resources is cancelled.

For example, a termination resource allocated for an audience user in a conference is defined as an abstract resource, which is named "ListenOnly Participant". The mapping relation between this abstract resource and the specific resources includes the following contents:
1. Name of the abstract resource: ListenOnly Participant.
2. Resource mapping description: The stream correlated with this termination is of a receive-only mode and an audio type.
3. Procedure: When the termination is added to a context, this abstract resource needs to be allocated, and it is necessary to ensure that the stream correlated with the termination in the context is of the receive-only mode and the audio type.

The mapping relation that includes the foregoing definition is pre-stored in the MG. If the MGC attempts to set the termination against such restrictions, the MG may return an error reply.

When the MGC requires the MG to reserve and/or allocate termination resources for an audience user, the MGC sends a command request to the MG. The command request carries the RD property of the ARM package, and the value of the RD property is set to "ListenOnly Participant". After receiving the command request, the MG determines the name of the abstract resource to be reserved and/or allocated according to the RD property, and searches for the mapping relation according to the name "ListenOnly Participant". After finding the corresponding "resource mapping description" and "procedure", the MG reserves and/or allocates the receive-only audio streams for the termination according to the found contents.

It should be noted that in this embodiment, after the mapping relation between the abstract resource and the specific resources is defined, the MGC needs to ensure consistency between the content included in the mapping relation in the subsequent resource operation indication and the setting of this mapping relation; otherwise, the MG may return an error reply.

In this embodiment, a mapping relation between the abstract resource and the specific resources is predefined. Therefore, the MGC may send a message indicative of reserving and/or allocating an abstract resource to instruct the MG to reserve and/or allocate multiple specific resources. When the MGC requires the MG to reserve and/or allocate more than one specific resource and set the specific resources, the number of times of the MGC sending the message indicative of reserving and/or allocating the resource is reduced, and the MGC instructs the MG to reserve and/or allocate resources more simply and efficiently.

Moreover, in this embodiment, the message indicative of reserving and/or allocating an abstract resource is formed by adding the property of the abstract resource to be reserved and/or allocated to the existing command request. By only extending the existing protocol simply, the bearer control device may instruct the bearer device to reserve and/or allocate resources more simply and efficiently, thus facilitating the implementation.

A resource management method is provided in the second embodiment of the present invention. The second embodiment is similar to the first embodiment, and the difference between the two embodiments lies in that: In the first embodiment, the message sent by the MGC to the MG as an indication of reserving and/or allocating an abstract resource includes only the name of the abstract resource to be reserved and/or allocated; that is, the RD property parameter of the command request includes only the name of the abstract resource. After receiving the message, the MG may search for the specific resources corresponding to the abstract resource according to the name, and reserve and/or allocate the resources. In this embodiment, however, the RD property parameter in the command request sent by the MGC to the MG includes not only the name of the abstract resource to be reserved and/or allocated, but also the supplementary information (also known as extra data) of the abstract resource. The extra data serves as a supplement to the basic definition of the abstract resource, namely, serves as a supplementary description about the specific resources corresponding to the abstract resource in the predefined mapping relation. The supplement includes: setting parameters for at least one of the specific resources corresponding to the abstract resource; or increasing or decreasing the specific resources corresponding to the abstract resource on the basis of the predefined mapping relation, or modifying the parameters of one of the specific resources. For example, in the foregoing case, if the RD property includes an abstract resource named "ListenOnly Participant", the extra data of the abstract resource may be set as a code type of a specific audio resource.

In this embodiment, the type of the RD property parameter may be a string list. Each string instance or element in the list includes the name of an abstract resource, and extra data. For example, the format of a string instance or element may be "name: extra data".

After receiving the command request, the MG may manage the resource collection composed of the found specific resources according to the supplementary information, and perform operations of reserving and/or allocating each specific resource in the managed resource collection. In the foregoing case, the MG needs to reserve and/or allocate audio resources, and set the specified code type. Through the extra data, the bearer control device can not only uniquely indicate the abstract resource that needs to be reserved and/or allocated, but also detail, add, delete or partially modify a defined abstract resource, thus indicating the resource reservation and/or allocation more precisely and flexibly.

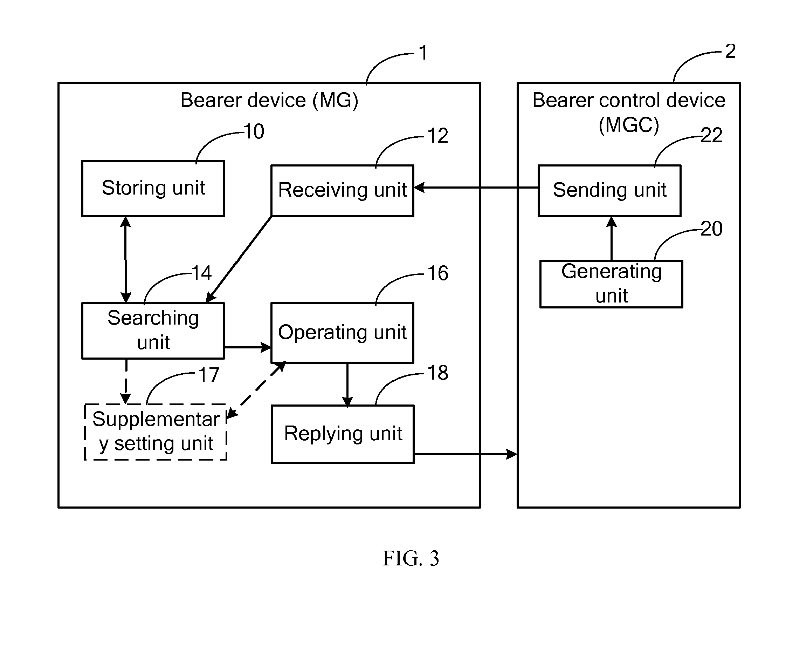

A bearer device is provided in the third embodiment of the present invention. The bearer device may be an MG 1. As shown in FIG. 3, the bearer device includes:
a storing unit 10, adapted to: store a mapping relation between an abstract resource and specific resources, where each abstract resource corresponds to at least one specific resource;
a receiving unit 12, adapted to receive a message indicative of reserving and/or allocating the abstract resource from a bearer control device;
a searching unit 14, adapted to search for the specific resources corresponding to the abstract resource to be reserved and/or allocated according to the mapping relation stored in the storing unit 10; and
an operating unit 16, adapted to perform operations of reserving and/or allocating the specific resources found by the searching unit 14.

Through a predefined and stored mapping relation between the abstract resource and the specific resources, the bearer control device may send a message indicative of reserving and/or allocating an abstract resource to instruct the bearer device to reserve and/or allocate multiple specific resources. When the bearer control device requires the bearer device to reserve and/or allocate more than one specific resource and set the specific resources, the number of times of the bearer control device sending the message indicative of reserving and/or allocating the resource is reduced, and the bearer control device instructs the bearer device to reserve and/or allocate resources more simply and efficiently.

The mapping relation between the abstract resource and the specific resources includes the name of the specific resource corresponding to the abstract resource, and optionally, includes the description about the management actions for the specific resource, and includes one or any combination of these items: rules and/or procedures that need to be followed in using the abstract resource, rules and/or procedures that need to be followed in using the specific resource, and rules and/or procedures that need to be followed in performing the management actions. The operating unit performs operations of reserving and/or allocating the specific resources according to the contents included in the mapping relation.

The message indicative of reserving and/or allocating the abstract resource may be a message that carries a property (called "RD property") indicative of the abstract resource to be reserved and/or allocated.

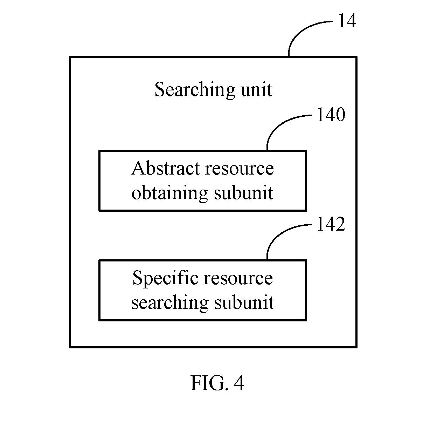

As shown in FIG. 4, in an embodiment of the present invention, the searching unit 14 may include:
an abstract resource obtaining subunit 140, adapted to obtain the abstract resource to be reserved and/or allocated from the RD property carried in the message received by the receiving unit 12; and
a specific resource searching subunit 142, adapted to search for each specific resource corresponding to the abstract resource obtained by the abstract resource obtaining unit according to the mapping relation.

By only extending the existing protocol simply, the bearer control device may instruct the bearer device to reserve and/or allocate resources more simply and efficiently, thus facilitating the implementation.

The RD property includes the name of the abstract resource, and optionally, includes supplementary information about the abstract resource. The bearer device may further include a supplementary setting unit 17, which is adapted to perform one or any combination of the following management actions according to the supplementary information in the RD property on the basis of the resource collection composed of the specific resources obtained by the searching unit 14:
setting parameters for at least one specific resource in the resource collection;
adding at least one specific resource to the resource collection;
deleting at least one specific resource from the resource collection; and
modifying the parameters of at least one specific resource in the resource collection.

The operating unit 16 performs operations of reserving and/or allocating each specific resource in the resource collection managed by the supplementary setting unit 17. The supplementary setting unit 17 performs temporary management actions, modifies, adds and deletes one or more specific resources corresponding to the abstract resource on the basis of the pre-stored mapping relation. Therefore, the requirements of the bearer control device for reserving and/or allocating resources are fulfilled more precisely, and the implementation is more precise and flexible.

The bearer device 1 may further include a replying unit 18, which is adapted to return a normal reply to the bearer control device 2 after the operating unit 16 performs the operation of reservation and/or allocation successfully. If performing the operation of reservation and/or allocation unsuccessfully, the operating unit 16 returns an error reply to the bearer control device 2. The error reply includes an error code and/or an error description text.

A bearer control device is provided in the fourth embodiment of the present invention. The bearer control device 2 may be an MGC. As shown in FIG. 3, the bearer control device includes:
a generating unit 20, adapted to generate a message indicative of reserving and/or allocating an abstract resource according to resources that needs to be reserved and/or allocated by a bearer device; and
a sending unit 22, adapted to send the message indicative of reserving and/or allocating the abstract resource to the bearer device.

The message indicative of reserving and/or allocating the abstract resource may be a message that carries a property (called "RD property") indicative of the abstract resource to be reserved and/or allocated. The RD property includes the name of the abstract resource, and optionally, includes supplementary information about the abstract resource.

In conclusion, in the embodiments of the present invention, a mapping relation between an abstract resource and specific resources is stored in the bearer device beforehand; each abstract resource may correspond to one or more specific resources; when the bearer control device 2 needs to instruct the bearer device to reserve and/or allocate resources, the bearer control device sends a message indicative of reserving and/or allocating an abstract resource to the bearer device 1, and the abstract resource indicated in the message corresponds to the specific resources that actually need to be reserved and/or allocated by the bearer device; and the bearer device 1 may reserve and/or allocate the corresponding specific resources according to the message. Therefore, when more than one specific resource needs to be reserved and/or allocated by the bearer device 1, the bearer control device 2 may send a message indicative of reserving and/or allocating an abstract resource rather than send multiple messages indicative of reserving and/or allocating specific resources, and the bearer control device 2 can instruct the bearer device 1 to reserve and/or allocate resources more simply and efficiently.

A property indicative of the abstract resource to be reserved and/or allocated is added to the existing command request to form a message indicative of reserving and/or allocating the abstract resource, and the message is sent to the bearer device 1. By only extending the existing protocol simply, the bearer control device instructs more simply and efficiently the bearer device to reserve and/or allocate resources, thus facilitating the implementation.

The property indicative of the abstract resource to be reserved and/or allocated may include the name of the abstract resource, and supplementary information about the abstract resource. In this way, the bearer control device can not only uniquely indicate the abstract resource that needs to be reserved and/or allocated, but also detail, add, delete or partially modify a defined abstract resource, thus indicating the resource reservation and/or allocation more precisely and flexibly.

It is understandable to those skilled in the art that all or part of the steps of the foregoing embodiments may be implemented by hardware instructed by a program. The program may be stored in a computer-readable storage medium. When being executed, the program performs the processes covered in the foregoing method embodiments. The storage medium may be a magnetic disk, a Compact Disk (CD), a Read-Only Memory (ROM), or a Random Access Memory (RAM).

Although the invention has been described through several exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A resource management method, comprising:
receiving a message indicative of reserving and/or allocating an abstract resource from a bearer control device;
searching for specific resources corresponding to the abstract resource to be reserved and/or allocated according to a mapping relation between the abstract resource and the specific resources in a bearer device, wherein each abstract resource corresponds to at least one specific resource; and
performing operations of reserving and/or allocating the specific resources as indicated by the bearer control device.

2. The resource management method of claim 1, wherein:
the mapping relation between the abstract resource and the specific resources comprises names of the specific resources corresponding to the abstract resource.

3. The resource management method of claim 2, wherein:
the mapping relation between the abstract resource and the specific resources further comprises one or any combination of these items: description about management actions for the specific resources, rules and procedures that need to be followed in using the abstract resource, rules and procedures that need to be followed in using the specific resources, and rules and/or procedures that need to be followed in performing the management actions; and
in the step of performing the operations of reserving and/or allocating the specific resources, the specific resources are reserved and/or allocated according to contents in the mapping relation.

4. The resource management method of claim 1, wherein:
the message indicative of reserving and/or allocating the abstract resource is a message that carries a property indicative of the abstract resource to be reserved and/or allocated;
the step of the bearer device searching for the specific resources corresponding to the abstract resource to be reserved and/or allocated according to the mapping relation comprises:
by the bearer device, obtaining the abstract resource to be reserved and/or allocated from the property of the message; and
searching for the specific resources corresponding to the obtained abstract resource according to the mapping relation.

5. The resource management method of claim 4, wherein:
the property comprises a name of the abstract resource and supplementary information about the abstract resource;
before performing the operations of reserving and/or allocating the specific resources, the method further comprises:
by the bearer device, performing one or any combination of the following management actions according to the supplementary information on the basis of a resource collection composed of the found specific resources:
setting parameters for at least one specific resource in the resource collection;
adding at least one specific resource to the resource collection;
deleting at least one specific resource from the resource collection; and
modifying parameters of at least one specific resource in the resource collection;
in the step of performing the operations of reserving and/or allocating the specific resources, the specific resources in the managed resource collection are reserved and/or allocated.

6. A bearer device, comprising:
a storing unit (10), adapted to store a mapping relation between an abstract resource and specific resources, wherein each abstract resource corresponds to at least one specific resource;
a receiving unit (12), adapted to receive a message indicative of reserving and/or allocating the abstract resource from a bearer control device;
a searching unit (14), adapted to search for the specific resources corresponding to the abstract resource to be reserved and/or allocated according to the mapping relation stored in the storing unit; and
an operating unit (16), adapted to perform operations of reserving and/or allocating the specific resources found by the searching unit.

7. The bearer device of claim 6, wherein:
the message received by the receiving unit (12) for indicating reservation and/or allocation of the abstract resource is a message that carries a property indicative of the abstract resource to be reserved and/or allocated;
the searching unit (14) comprises:
an abstract resource obtaining subunit (140), adapted to obtain the abstract resource to be reserved and/or allocated from the property carried in the message received by the receiving unit; and
a specific resource searching subunit (142), adapted to search for the specific resources corresponding to the abstract resource obtained by the abstract resource obtaining unit (140) according to the mapping relation.

8. The bearer device of claim 7, wherein:
the property indicative of the abstract resource to be reserved and/or allocated in the message received by the receiving unit comprises a name of the abstract resource and supplementary information about the abstract resource;
the bearer device (1) further comprises:
a supplementary setting unit (17), adapted to perform one or any combination of the following management actions according to the supplementary information on the basis of a resource collection composed of the specific resources found by the searching unit (14):
setting parameters for at least one specific resource in the resource collection;
adding at least one specific resource to the resource collection;
deleting at least one specific resource from the resource collection; and
modifying parameters of at least one specific resource in the resource collection;
the operating unit (16) performs the operations of reserving and/or allocating the specific resource in the resource collection managed by the supplementary setting unit.

9. The bearer device of claim 6, further comprising:
a replying unit (18), adapted to return a normal reply to the bearer control device after the operating unit performs the operations of reservation and/or allocation successfully, and return an error reply to the bearer control device after the operating unit performs the operations of reservation and/or allocation unsuccessfully, wherein the error reply comprises an error code and/or an error description text.

10. A bearer control device, comprising:
a generating unit (20), adapted to generate a message indicative of reserving and/or allocating an abstract resource according to resources that needs to be reserved and/or allocated by a bearer device; and
a sending unit (22), adapted to send the message indicative of reserving and/or allocating the abstract resource to the bearer device.
